# EUROPÄISCHE PATENTSCHRIFT

(11) **EP 1 186 824 B1**
(45) Veröffentlichungstag und Bekanntmachung des Hinweises auf die Patenterteilung: **11.01.2006**
(21) Anmeldenummer: 01120457.5
(22) Anmeldetag: 28.08.2001
(51) Int. Cl.: F16L 39/02

(54) **Anschlussvorrichtung zum Verbinden einer Fluidleitung mit einer zweiten Anschlussvorrichtung**
Connecting device for connecting a fluid line with a second connecting device
Dispositif de connexion pour relier une conduite de fluide à un deuxième dispositif de connexion

(30) Priorität: 06.09.2000 DE 10044144
(43) Veröffentlichungstag der Anmeldung: 13.03.2002
(73) Patentinhaber: Klenk GmbH, 88285 Bodnegg-Rotheidlen (DE)
(72) Erfinder: Kessler, Walter, 88069 Tettnang (DE)
(74) Vertreter: Eisele, Otten, Roth & Dobler

(56) Entgegenhaltungen:
- DE-A- 3 138 355
- DE-A- 4 329 147
- DE-A- 19 717 182
- DE-U- 7 333 316
- US-A- 2 532 891
- US-A- 4 770 207

## Beschreibung

Die Erfindung betrifft eine Anschlussvorrichtung zum Verbinden einer Fluidleitung mit einer zweiten Anschlussvorrichtung nach dem Oberbegriff des Anspruchs 1.

Für die Beförderung von umweltrelevanten Fluiden, insbesondere von wassergefährdenden, brennbaren und/oder nicht brennbaren Flüssigkeiten wie flüssigen Kraftstoffen oder dergleichen, sind zahlreiche verschiedenste Fluidleitungen im Einsatz. Je nach Einsatzort und Einsatzart weist eine entsprechende Anschlussvorrichtung zum Anschließen an einer zweiten Anschlussvorrichtung, insbesondere eines Tanks, einer Zapfpistole oder dergleichen, einen Anschlussflansch oder eine Anschlusskupplung auf.

Die Anschlüsse entsprechender Fluidleitungen müssen häufig gelöst und wieder geschlossen werden. Insbesondere Anschlusskupplungen, beispielsweise für Versorgungsleitungen, die vor allem zur Betankung eines entsprechenden Tanks mittels eines Tankfahrzeuges vorgesehen sind, werden sehr häufig an- bzw. abgekuppelt. Gerade bei dieser Anwendung kann bei entsprechend unsachgemäßer Behandlung die Anschlusskupplung beschädigt werden, so dass hierdurch gegebenenfalls Kraftstoff in die Umwelt gelangen kann.

Entsprechende Anschlussflansche bzw. Kupplungen weisen im Allgemeinen auch ein Dichtelement auf, das insbesondere im Laufe der Zeit eine ausreichende Abdichtung des Anschlusses nicht mehr gewährleisten könnte.

Aus der Druckschrift DE 43 29 147 A1 ist eine doppelwandige Armatur mit Schraubenanschlüssen zum Einfügen in ein Doppelwandrohrleitungssystem bekannt, wobei eine Einrichtung zum Überwachen des Ringraumes zwischen den Rohrwänden vorgesehen ist, die einen Drucksensor zur Überwachung eines Unter- oder Überdrucks umfasst. Nachteilig hierbei ist die vergleichsweise lange Wartezeit, insbesondere bei sehr langen Rohren, bis die Fluide transportabel sind.

Der Druckschrift DE 197 17 182 A1 kann eine flexible, doppelwandige Schlauchleitung entnommen werden, wobei eine Lecküberwachung vorgesehen ist.

Der Druckschrift US 4,770,207 ist ein einwandiges Fluidmesssystem zu entnehmen, das Ventile zum Absperren entsprechender Fluidleitungen aufweist. Die Druckschrift US 2,532,891 offenbart eine Anschlussvorrichtung zum Verbinden einer Fluidleitung. Entsprechend einwandige Rohrleitungen sind gegenüber doppelwandigen Rohrleistungssystemen unter dem Aspekt der Sicherheit nicht vergleichbar.

Gegenüber diesem Stand der Technik hat die vorliegende Erfindung die Aufgabe, eine Vorrichtung mit einer doppelwandigen Fluidleitung und einer Anschlussvorrichtung vorzuschlagen, wobei die Lecküberwachung unmittelbar nach dem Verbinden einsatzbereit ist.

Diese Aufgabe wird, ausgehend von einer Anschlussvorrichtung der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen möglich.

Dementsprechend zeichnet sich eine erfindungsgemäße Anschlussvorrichtung dadurch aus, dass wenigstens ein Ventil zwischen dem Überwachungsvolumen und dem Zwischenraum angeordnet ist. Beispielsweise kann mit Hilfe des vorteilhaften Ventils der Unter- oder Überdruck im Zwischenraum zwischen den beiden Leitungen erhalten bleiben. Durch das Anschließen an eine weitere Anschlussvorrichtung kann das Ventil den Zwischenraum mit dem Überwachungsvolumen in vorteilhafter Weise verbinden, so dass mit Hilfe einer entsprechenden Über- bzw. Unterdruckerzeugungseinheit lediglich das Volumen des Überwachungsvolumens mit einem entsprechenden Druck zu beaufschlagen ist. Dieses Überwachungsvolumen ist gerade bei Anwendungsfällen, bei denen sehr lange Schlauchleitungen mit entsprechend großvolumingen Zwischenräumen verwendet werden, nahezu vernachlässigbar. Aus diesem Grund ist das gesamte zu überwachende Volumen unmittelbar durch den Anschlussvorgang mit dem Überwachungsdruck beaufschlagt. Dies erhöht entscheidend die Sicherheit beim Befördern entsprechend umweltrelevanter Fluide, da mit der vorliegenden Erfindung in der Praxis der Fall nicht auftreten kann, dass das umweltrelevante Fluid bereits befördert wird, ohne dass der Überwachungsdruck in den entsprechenden Zwischenräumen bzw. Überwachungsvolumen in ausreichendem Maß ansteht. Mit Hilfe der Erfindung wird sichergestellt, dass gegebenenfalls auftretende Leckagen des Anschlusses jederzeit erfassbar sind. Beispielsweise wird hierbei, insbesondere durch einen mechanischen Formschluss der beiden Anschlussvorrichtungen, ein sicheres Anschließen gewährleistet, so dass die Detektierung der Anschlussverbindung eine ausreichende Überwachung des Anschlusses ermöglicht.

Gemäß der Erfindung ist das Ventil in Ruhestellung der Anschlussvorrichtung bzw. im nicht angeschlossenen Zustand geschlossen und wird mechanisch, elektrisch und/oder magnetisch durch das Anschließen an eine zweite Anschlussvorrichtung geöffnet bzw. auf Durchlass geschaltet. Hierdurch wird ermöglicht, dass insbesondere der Zwischenraum der Schlauchleitung vor allem auch nach dem Entfernen der zweiten Anschlussvorrichtung der Über- bzw. Unterdruck des Zwischenraumes erhalten bleibt. Hierdurch wird die vergleichsweise langwierige Erzeugung des vorgesehenen Über- bzw. Unterdrucks in der Schlauchleitung und dem Überwachungsvolumen wesentlich verkürzt, da lediglich das Überwachungsvolumen entsprechend Druck beaufschlagt und/oder ein kleinerer Druckabfall in der Schlauchleitung ausgeglichen werden muss. Dies ermöglicht, dass nach dem Anschließen der Anschlussvorrichtung die erfindungsgemäße Lecküberwachung des Anschlusses sowie der Fluidleitung vergleichsweise schnell realisierbar ist und die Beförderung des Fluids entsprechend zügig erfolgen kann.

Darüber hinaus kann, insbesondere mittels dieser Ausführungsvariante, in vorteilhafter Weise ein sich über mehrere Anschlussvorrichtungen, einschließlich mehrerer Schlauchleitungen, erstreckender Überwachungsraum umgesetzt werden. Dies ist insbesondere für Schwimmbagger oder dergleichen vorteilhaft, da diese beispielsweise aufgrund der größer werdenden Entfernungen zum am Land positionierten Versorgungstank häufig ihre Versorgungsleitungen von Zeit zu Zeit verlängern müssen.

Beispielsweise kann mittels einer entsprechend ausgeführten Leckauswerteeinheit, die eine optisch und/oder akustische Signalanzeigeeinheit aufweist, und der erfindungemäßen Überwachungseinheit die Leckage anzeigt werden, so dass im Fall der Leckage die Beförderung des Fluids sofort unterbrochen werden kann. Hierdurch ist eine relevante Beeinträchtigung der Umgebung vermeidbar.

Mit Hilfe der als flexible Schlauchleitung ausgebildeten Fluidleitung wird ermöglicht, dass eine erfindungsgemäße Anschlussvorrichtung auch für Anwendungen vorgesehen werden kann, bei denen eine dauerhaft flexible und somit erheblich vielseitiger einsetzbare Fluidleitung, insbesondere auch als Tankschlauch zum Betanken und/oder Leeren eines Lagertankes, Schlauchtrommel, Zapfschlauch einer Tankstelle, Versorgungsleitung oder dergleichen, realisierbar ist.

Durch den im Innern des Außenschlauches angeordneten, fluidführenden Innenschlauch, wobei insbesondere ein Zwischenraum zwischen dem Innenschlauch und dem Außenschlauch zur Lecküberwachung der Schlauchleitung vorgesehen ist, wobei vorzugsweise ein Abstandshalter zwischen dem Innenschlauch und dem Außenschlauch zur Lecküberwachung der Schlauchleitung vorgesehen ist, wird eine Lecküberwachung auch der Fluidleitung realisierbar.

Der Drucksensor zur Überwachung eines Unter- oder Überdrucks ermöglicht, dass eine möglicherweise auftretende Leckage zur Änderung des Fluiddrucks und/oder zur Änderung des Umgebungsdrucks des Fluids im Bereich des Anschlusses führen kann, der erfindungsgemäß mittels des Drucksensors detektierbar ist.

Die Überwachungseinheit kann auch einen Sensor zur elektrischen Überwachung des Anschlusses umfassen. Beispielsweise ist eine Überwachungseinheit denkbar, die eine Detektierung der Leckage des Anschlusses mittels einer Leitfähigkeits- bzw. Widerstandsänderung, einer Kontaktierung oder dergleichen ermöglicht.

In vorteilhafter Weise umfasst die Überwachungseinheit ein radial umlaufendes Überwachungsvolumen. Ist das Überwachungsvolumen beispielsweise mit einem Überdruck beaufschlagt, führt eine Leckage des Anschlusses zu einem messbaren Druckabfall im Überwachungsvolumen, der insbesondere mittels der Leckauswerteeinheit zur Abschaltung der Fluidbeförderung verwendet werden kann. Ist das Überwachungsvolumen mit einem Unterdruck beaufschlagt, so führt eine Leckage des Anschlusses zu einem messbaren Druckanstieg im Überwachungsvolumen, der wiederum mittels der Leckauswerteeinheit zum Beenden der Fluidförderung herangezogen werden kann.

Vorzugsweise wird das Überwachungsvolumen wenigstens zwischen zwei Dichtringen angeordnet. Insbesondere der innere Dichtring grenzt das Überwachungsvolumen gegenüber dem Fluid ab. Das erfindungsgemäße Überwachungsvolumen kann in vorteilhafter Weise dadurch gebildet werden, dass eine Anschlussvorrichtung mit einem Innenring an eine Anschlussvorrichtung mit einem Außenring angeordnet wird.

In einer besonderen Ausführungsform der Erfindung ist zur Ausbildung des Überwachungsvolumens eine radial umlaufende Nut vorgesehen. Insbesondere hierbei ist in vorteilhafter Weise ein Dichtelement zum Verbinden der Überwachungsvolumen zweier Anschlussvorrichtungen ausgebildet. Bei dieser Ausführungsvariante können beispielsweise zwei nahezu gleiche Anschlussvorrichtungen, die gegebenenfalls jeweils eine radial umlaufende Ausnehmung zur Ausbildung eines Überwachungsvolumens aufweisen, zusammen mit einem scheibenförmigen Dichtelement den Anschluss bilden.

Das Dichtelement weist, insbesondere zur Beförderung des Fluids, eine vergleichsweise große innere Ausnehmung sowie zum Verbinden der beiden Überwachungsvolumen wenigstens eine, vorzugsweise mehrere, vergleichsweise kleine Ausnehmungen auf. Gegebenenfalls kann der Anschluss mittels zweier Anschlussvorrichtungen dadurch realisiert werden, dass lediglich eine Anschlussvorrichtung das Dichtelement aufweist.

In einer vorteilhaften Weiterbildung der Erfindung umfasst die Anschlussvorrichtung ein Kupplungselement zum Ankuppeln an die zweite Anschlussvorrichtung. Hierdurch wird gewährleistet, dass ein vergleichsweise schnelles und häufiges Anschließen ohne Werkzeug realisierbar ist. Dies ist insbesondere für die Beförderung von Kraftstoffen oder dergleichen vorteilhaft.

Eine erfindungsgemäße Anschlussvorrichtung mit einem Flanschelement, insbesondere zum festen Anschließen an einer zweiten Anschlussvorrichtung ist für spezielle Anwendungen ebenfalls vorteilhaft. Die erfindungsgemäßen Ausführungsformen der Anschlussvorrichtung, insbesondere die Ausbildung eines radial umlaufenden Überwachungsvolumens, ist hierbei entsprechend vorteilhaft.

Vorteilhafterweise ist der Zwischenraum mit dem Überwachungsvolumen verbunden, so dass eine durchgehende, lückenlose Lecküberwachung realisierbar ist. Insbesondere mit einer durchgehenden Lecküberwachung, beispielsweise vom Lagertank bis zum Tankwagen oder ähnlichem, mittels einer erfindungsgemäßen Anschlussvorrichtung kann gegebenenfalls auf aufwendige Bodenabdichtungen, Rückhaltevorrichtungen, Abscheideanlagen oder dergleichen verzichtet werden. Hierdurch kann eine erhebliche Kostenersparnis erzielt werden.

Darüber hinaus wird der Aufwand nicht nur für den Bau, sondern auch für die Instandhaltung entsprechender Vorrichtungen bzw. Anlagen deutlich reduziert, was zu einem wirtschaftlich günstigen Befördern entsprechender Fluide führen kann.

Vorzugsweise ist eine gemeinsame Leckauswerteeinheit zur Lecküberwachung des Anschlusses und der Schlauchleitung vorgesehen. Dies ist insbesondere bei allen Ausführungsvarianten der Erfindung vorteilhaft. Eine erfindungsgemäße, gemeinsame Leckauswerteeinheit ist vor allem auch bei Verwendung eines Anschlussflansches vorteilhaft. Durch die gemeinsame Leckauswerteeinheit wird eine vollständige Lecküberwachung mit sehr geringem Aufwand realisierbar, was insbesondere zu einer wirtschaftlich günstigen Lecküberwachung führen kann.

Vorteilhafterweise umfasst die Leckauswerteeinheit wenigstens eine Signalausgabeeinheit zur Freigabe der Fluidbeförderung. Mittels einer entsprechenden Leckauswerteeinheit kann hierdurch eine Steuerung der Fluidbeförderung realisiert werden. Beispielsweise kann die Fluidbeförderung erst nach erfolgter Lecküberwachung freigegeben werden, insofern hierbei keine Leckage festgestellt wurde. Wird jedoch eine Leckage beispielsweise nach dem Anschließen einer zweiten Anschlussvorrichtung oder während der Fluidbeförderung festgestellt, so kann die Förderung nicht freigegeben oder die Freigabe sofort gestoppt werden. Hierdurch wird in vorteilhafter Weise eine relevante Beeinträchtigung der Umwelt vermeidbar. Auch kann hierdurch eine automatische Fluidbeförderung realisiert werden, ohne dass gegebenenfalls durch unsachgemäße Handhabung eine Leckage eventuell größere Mengen des Fluids freisetzen kann. Wartung des erfindungsgemäßen Überwachungsvolumens auf. Hierdurch kann beispielsweise eine technische Überprüfung der erfindungsgemäßen Anschlussvorrichtung während der Lecküberwachung durchgeführt werden. In vorteilhafter Weise wird hierdurch eine regelmäßig vorzusehende technische Überwachung ohne großen Aufwand realisierbar, was insbesondere die Sicherheit einer ordnungsgemäßen und störungsfreien Fluidbeförderung deutlich erhöhen kann.

Grundsätzlich ist die Ausbildung zweier anschließbarer, insbesondere ineinander kuppelbarer, Anschlussvorrichtungen mit jeweils einem Ventil vorteilhaft. Hierdurch sind beim entsprechenden Anschluss dieser Anschlussvorrichtungen die Ventile derartig anordenbar, dass zwei Verbindungen zwischen dem Überwachungsvolumen sowie den Zwischenräumen der Schlauchleitungen realisiert werden können, was die Lecküberwachung verbessert und somit die Sicherheit der Anschlussvorrichtung erhöht.

Allgemein ist eine erfindungsgemäße Lecküberwachung des Anschlusses sowohl mit einem Flansch als auch mit einer Kupplung vorteilhaft. Darüber hinaus ist die erfindungsgemäße Anschlussvorrichtung sowohl bei Verwendung einer flexiblen, ein- oder mehrwandigen Schlauchleitung als auch bei Verwendung von ein- oder mehrwandigen Rohren vorteilhaft.

### Ausführungsbeispiel

Ein Ausführungsbeispiel der Erfindung ist in der Zeichnung dargestellt und wird anhand der Figuren nachfolgend näher erläutert.

Im Einzelnen zeigen
- Fig. 1: einen schematisch dargestellten Längsschnitt durch eine Anschlussstelle zweier erfindungsgemäßer Anschlussvorrichtungen,
- Fig. 2: eine schematisch dargestellte Draufsicht auf eine erfindungsgemäße Anschlussvorrichtung und
- Fig. 3: ein erfindungsgemäßes Dichtelement.

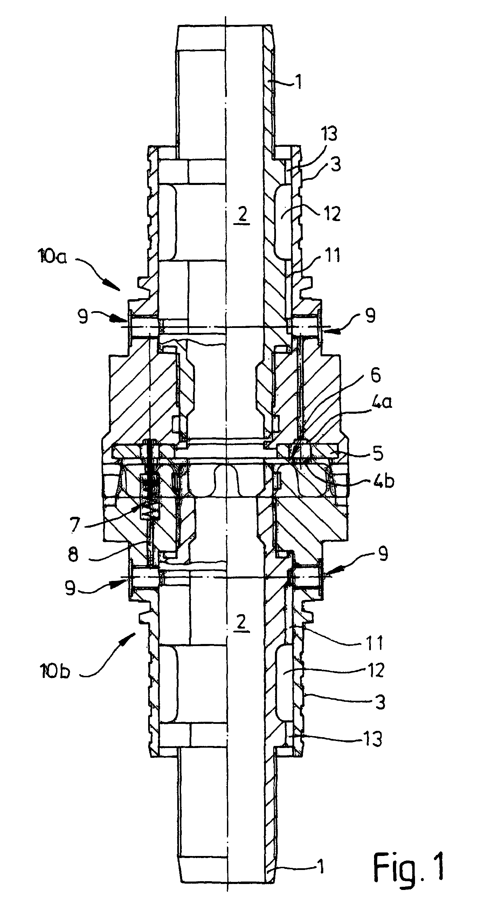

Zwei Vorrichtung 10a, 10b gemäß Figur 1 sind jeweils zur Aufnahme einer Doppelschlauchleitung vorgesehen, wie sie beispielsweise in der Druckschrift DE 197 17 182 offenbart ist. Hierbei wird ein nicht näher dargestellter Innenschlauch auf eine Innenschlauchtülle 1 aufgeschoben bzw. aufgeschraubt. Der Innenschlauch bildet hierbei eine Förderleitung 2 aus. Gegebenenfalls kann der Innenschlauch zwischen der Innenschlauchtülle 1 und einer nicht näher dargestellten Hülse oder dergleichen dicht verklemmt werden.

Eine Außenschlauchtülle 3 ist zur Aufnahme eines nicht näher dargestellten Außenschlauches ausgebildet, wobei ein Zwischenraum zwischen dem Innenschlauch und dem Außenschlauch gebildet wird und dieser ein nicht näher dargestelltes Netz umfassen kann.

Die beiden Vorrichtungen 10 sind derart ausgebildet, dass sie lediglich von Hand angekuppelt bzw. abgekuppelt werden können. Hierbei ermöglicht insbesondere die Außenschlauchtülle 3 ein Ankuppeln an standardisierte Kupplungen wie sie insbesondere bei der Beförderung von Kraftstoffen gebräuchlich sind.

Im dargestellten Ausführungsbeispiel gemäß der Figur 1 ist eine Überwachungseinheit als Ringnut 4 ausgebildet. Eine Flachdichtung 5 verbindet gemäß der Figur 1 die beiden Ringnuten 4a und 4b in der Weise, dass diese mittels mehreren Ausnehmungen 6 ein radial umlaufendes Überwachungsvolumen ausbilden. Hierdurch ist eine Lecküberwachung dadurch realisiert, dass insbesondere beide Stirnseiten der Flachdichtung 5 und somit die Stirnseiten, d.h. der Anschluss, der Vorrichtung 10 überwachbar sind.

Die Lecküberwachung des Anschlusses der beiden Vorrichtungen 10 erfolgt in der Weise, dass ein Ventil 7 im angekuppelten Zustand der beiden Vorrichtungen 10 geöffnet bzw. durchlässig ist und hierdurch eine Verbindung des mittels der beiden Ringnuten 4a und 4b gebildeten Überwachungsvolumens über eine Bohrung 8 mit einer Bohrung 9 zum Anschluss einer Messleitung herstellt wird. An die Bohrung 9 ist beispielsweise eine nicht näher dargestellte Schnellkupplung einschraubbar, so dass mittels der Schnellkupplung ein vorteilhaftes Anschließen einer Leckauswerteinheit mittels der Messleitung vorgesehen werden kann. In der Leckauswerteinheit ist vorzugsweise eine Pumpe zur Erzeugung eines Über- oder Unterdrucks sowie ein Drucksensor vorgesehen.

Die Vorrichtung 10 weist weiterhin mehrere Ausnehmungen 11, 12 und 13 auf, die eine Verbindung zwischen der Bohrung 9 und dem nicht dargestellten Zwischenraum der Schlauchleitung herstellt. Hierdurch ist eine durchgehende, lückenlose Lecküberwachung einer Schlauchleitung, einschließlich der an deren Enden angeordnete Vorrichtungen 10, realisierbar. Beispielsweise ist hiermit eine lückenlose Lecküberwachung von einem Lagertank bis zu einem Tankwagen umsetzbar, so dass insbesondere aufwendige Bodenabdichtungen, Rückhaltevorrichtungen, Abscheideanlagen oder dergleichen bei einer entsprechenden Beförderung von flüssigen Kraftstoffen vermeidbar sind. Dies führt insbesondere zu einer wirtschaftlich günstigen Betankung.

Die Ausnehmung 12 der Innenschlauchtülle 1 ist im Gegensatz zu den beiden Ausnehmungen 11 und 13 ringförmig ausgebildet, so dass ein umlaufender Hohlraum zwischen der Außenschlauchtülle und der Innenschlauchtülle 1 im Bereich der Ausnehmung 12 gebildet wird.

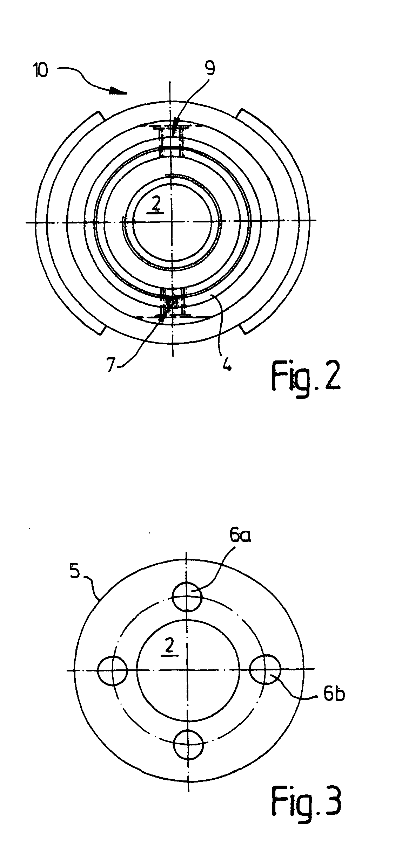

In Figur 2 ist eine erfindungsgemäße Vorrichtung 10 in Draufsicht dargestellt, die insbesondere die Anordnung der Ringnut 4 sowie des Ventils 7, einschließlich der Bohrung 9, näher verdeutlicht.

In Figur 3 ist die Flachdichtung 5 mit den darin vorgesehenen Ausnehmungen 6 dargestellt.

In nicht näher dargestellter Weise weist sowohl die Vorrichtung 10a als auch die Vorrichtung 10b ein Ventil 7 auf, wobei die beiden Ventile 7 jedoch beispielsweise um 90° versetzt bei Anschluss der beiden Vorrichtungen 10 angeordnet sind, so dass die beiden Ventile 7 die Flachdichtung 5 an der Ausnehmung 6a und an der Ausnehmung 6b durchdringen. Die Anordnung von zwei Ventilen 7 verbessert insbesondere die Ausbildung eines durchgehenden Überwachungsraumes.

Mittels des erfindungsgemäßen Überwachungsraumes, der sowohl mit Unter- als auch mit Überdruck beaufschlagt werden kann, wird mittels einem nicht näher dargestellten Messsensor, der in der Leckauswerteeinheit angeordnet ist, der Druck und/oder die Strömungsverhältnisse im Überwachungsraum überwacht. Bei Auftreten signifikanter Änderungen in den Druck- oder Strömungsverhältnissen im Überwachungsraum ist von einem Leck auszugehen. Dieses Leck kann sich dabei sowohl im Außenschlauch als auch im Innenschlauch sowie im Bereich der Flachdichtung 5 befinden.

Sofern das Leck im Außenschlauch auftritt, kann das im Innern der Förderleitung 2 geförderte Fluid nicht nach Außen dringen, so dass die Sicherheit der entsprechenden Fördervorrichtung gewährleistet bleibt, da aufgrund der Lecküberwachung eine sofortige Beendigung der Förderung und Reparatur erfolgen kann.

Sofern das Leck im Innenschlauch austritt, dichtet zum einen der Außenschlauch die Förderanlage nach Außen hin ab, so dass das geförderte Fluid nicht in die Umgebung gelangen kann. Zum anderen ist jedoch über die genannte Lecküberwachung wiederum eine sofortige Erfassung des Lecks gegeben, wodurch eine unverzügliche Wartung und Reparatur erfolgen kann. Die Umgebung der entsprechenden Förderanlage bleibt also auch im Fall eines Lecks im Innenschlauch vollständig von dem im Inneren der Förderleitung 2 befindlichen Fluid unbeeinträchtigt.

Ein Leck im Bereich der Flachdichtung 5 bzw. des Anschlusses der beiden Vorrichtungen 10a, 10b wird erfindungsgemäß erfasst und führt beispielsweise zu einer automatischen Unterbrechung der Förderung des Fluids. Grundsätzlich kann eine Signalübertragung an die Pumpstation des Fluids mittels einer Sende-Empfänger-Vorrichtung, einer entsprechenden Zusatzleitung oder dergleichen vorgesehen werden.

### Bezugszeichenliste:

- 1: Innenschlauchtülle
- 2: Förderleitung
- 3: Außenschlauchtülle
- 4: Ringnut
- 5: Flachdichtung
- 6: Ausnehmung
- 7: Ventil
- 8: Bohrung
- 9: Bohrung
- 10: Vorrichtung
- 11: Ausnehmung
- 12: Ausnehmung
- 13: Ausnehmung

## Patentansprüche

1. Vorrichtung mit einer Fluidleitung und wenigstens einer Anschlussvorrichtung (10) zum Verbinden der Fluidleitung mit einer zweiten Anschlussvorrichtung (10), insbesondere für die Beförderung umweltrelevanter Fluide, wobei die Fluidleitung als flexible Schlauchleitung ausgebildet ist sowie einen im Innern eines Außenschlauches angeordneten, fluidführenden Innenschlauch umfasst, und wobei wenigstens eine Überwachungseinheit, die ein Überwachungsvolumen (4) zur Lecküberwachung des Anschlusses der beiden Anschlussvorrichtungen und einen Drucksensor zur Überwachung eines Unter- oder Überdrucks umfasst sowie ein Zwischenraum zwischen dem Innenschlauch und dem Außenschlauch zur Lecküberwachung der Schlauchleitung vorgesehen ist, **dadurch gekennzeichnet, dass** wenigstens ein Ventil(7) zwischen dem Überwachungsvolumen und dem Zwischenraum angeordnet ist.

2. Vorrichtung mit einer Fluidleitung und wenigstens einer Anschlussvorrichtung (10) nach Anspruch 1, **dadurch gekennzeichnet, dass** die Überwachungseinheit ein radial umlaufendes Überwachungsvolumen (4) umfasst.

3. Vorrichtung mit einer Fluidleitung und wenigstens einer Anschlussvorrichtung (10) nach einem der vorgenannten Ansprüche, **dadurch gekennzeichnet, dass** ein Dichtelement (5) zum Verbinden der Überwachungsvolumen (4a, 4b) zweier Anschlussvorrichtungen (10a, 10b) ausgebildet ist.

4. Vorrichtung mit einer Fluidleitung und wenigstens einer Anschlussvorrichtung (10) nach einem der vorgenannten Ansprüche, **dadurch gekennzeichnet, dass** die Anschlussvorrichtung (10) ein Kupplungselement zum Ankuppeln an die zweite Anschlussvorrichtung (10) umfasst.

5. Vorrichtung mit einer Fluidleitung und wenigstens einer Anschlussvorrichtung (10) nach einem der vorgenannten Ansprüche, **dadurch gekennzeichnet, dass** eine gemeinsame Leckauswerteeinheit zur Lecküberwachung des Anschlusses und der Schlauchleitung vorgesehen ist.

6. Vorrichtung mit einer Fluidleitung und wenigstens einer Anschlussvorrichtung (10) nach einem der vorgenannten Ansprüche, **dadurch gekennzeichnet, dass** die Leckauswerteeinheit wenigstens eine Signalausgabeeinheit zur Freigabe der Fluidbeförderung umfasst.

7. Vorrichtung mit einer Fluidleitung und wenigstens einer Anschlussvorrichtung (10) nach einem der vorgenannten Ansprüche, **dadurch gekennzeichnet, dass** wenigstens ein Adapterelement zum Anschluss an unterschiedlichste Anschlussvorrichtungen vorgesehen ist.

## Claims

1. Device with a fluid line and at least one connecting device (10) for connecting the fluid line with a second connecting device (10), in particular for conveying environmentally sensitive fluids, whereby the fluid line is in the form of a flexible hose line and comprises an inner tube conveying the fluid positioned inside an outer hose, and whereby at least one monitoring unit is provided which comprises a monitoring volume (4) for monitoring the leakage of the connection between the two connecting devices and a pressure sensor for monitoring under pressure or over pressure and an intermediate space between the inner tube and the outer hose for monitoring the leakage of the hose line, **characterised in that** at least one valve (7) is arranged between the monitoring volume and the intermediate space.

2. Device with a fluid line and at least one connecting device (10) according to claim 1, **characterised in that** the monitoring unit comprises a radially positioned monitoring volume (4).

3. Device with a fluid line and at least one connecting device (10) according to one of the preceding claims, **characterised in that** a seal element (5) is designed to connect the monitoring volume (4a, 4b) of two connecting devices (10a, 10b).

4. Device with a fluid line and at least one connecting device (10) according to one of the preceding claims, **characterised in that** the connecting device (10) comprises a coupling element for coupling onto the second connecting device (10).

5. Device with a fluid line and at least one connecting device (10) according to one of the preceding claims, **characterised in that** a joint leak evaluation device is provided for monitoring leaks in the connection and the hose line.

6. Device with a fluid line and at least one connecting device (10) according to one of the preceding claims, **characterised in that** the leak evaluation unit comprises at least one signal output device to enable the fluid conveyance.

7. Device with a fluid line and at least one connecting device (10) according to one of the preceding claims, **characterised in that** at least one an adapter element is provided for connection to various different connecting devices.

## Revendications

1. Dispositif comportant une conduite de fluide et au moins un dispositif de raccordement (10) afin de relier la conduite de fluide à un deuxième dispositif de raccordement (10), notamment pour le transport de fluides constituant un risque pour l'environnement, la conduite de fluide étant réalisée sous forme de conduite flexible et comportant un tuyau interne conduisant un fluide et agencé à l'intérieur d'un tuyau externe, et au moins une unité de surveillance étant prévue, laquelle comporte un volume de contrôle (4) pour le contrôle d'étanchéité du raccord des deux dispositifs de raccordement et un capteur de pression pour le contrôle d'une surpression ou d'une dépression ainsi qu'un espace intermédiaire entre le tuyau interne et le tuyau externe pour le contrôle d'étanchéité de la conduite flexible,
**caractérisé en ce qu'**il est agencé au moins une soupape (7) entre le volume de contrôle et l'espace intermédiaire.

2. Dispositif comportant une conduite de fluide et au moins un dispositif de raccordement (10) selon la revendication 1,
**caractérisé en ce que** l'unité de surveillance comporte un volume de contrôle (4) faisant le tour dans le sens radial.

3. Dispositif comportant une conduite de fluide et au moins un dispositif de raccordement (10) selon l'une des revendications précédentes,
**caractérisé en ce qu'**un élément d'étanchéité (5) est réalisé afin de relier les volumes de contrôle (4a, 4b) de deux dispositifs de raccordement (10a, 10b).

4. Dispositif comportant une conduite de fluide et au moins un dispositif de raccordement (10) selon l'une des revendications précédentes,
**caractérisé en ce que** le dispositif de raccordement (10) comporte un élément d'accouplement pour l'accouplement au deuxième dispositif de raccordement (10).

5. Dispositif comportant une conduite de fluide et au moins un dispositif de raccordement (10) selon l'une des revendications précédentes,
**caractérisé en ce qu'**une unité d'évaluation d'étanchéité commune est prévue pour le contrôle d'étanchéité du raccord et de la conduite flexible.

6. Dispositif comportant une conduite de fluide et au moins un dispositif de raccordement (10) selon l'une des revendications précédentes,
**caractérisé en ce que** l'unité d'évaluation d'étanchéité comporte au moins une unité d'émission de signaux afin d'autoriser le transport de fluide.

7. Dispositif comportant une conduite de fluide et au moins un dispositif de raccordement (10) selon l'une des revendications précédentes,
**caractérisé en ce qu'**il est prévu au moins un élément d'adaptation pour le raccordement aux dispositifs de raccordement les plus divers.
